# EUROPEAN PATENT SPECIFICATION

(11) **EP 4 122 677 B1**
(45) Date of publication and mention of the grant of the patent: **03.01.2024**
(21) Application number: 22177446.6
(22) Date of filing: 07.06.2022
(51) Int. Cl.: B29C 63/04, B29C 63/48

(54) **IMPROVED METHOD FOR MAKING A COMPOSITE ELEMENT PREFERABLY FOR FURNITURE OR BUILDING AND COMPOSITE ELEMENT SO OBTAINABLE**
VERBESSERTES VERFAHREN ZUR HERSTELLUNG EINES VERBUNDELEMENTES, VORZUGSWEISE FÜR MÖBEL ODER GEBÄUDE UND SO HERSTELLBARES VERBUNDELEMENT
PROCEDE AMELIORE POUR LA FABRICATION D'UN ELEMENT COMPOSITE DE PREFERENCE POUR MEUBLES OU BATIMENTS ET ELEMENT COMPOSITE AINSI OBTENU

(30) Priority: 20.07.2021 IT 202100019250
(43) Date of publication of application: 25.01.2023
(73) Proprietor: Unionprofili S.r.l., 33080 Prata di Pordenone PN (IT)
(72) Inventor: BIASUZZI, Sante, Prata di Pordenone (PN) (IT); BIASUZZI, Filippo, Prata di Pordenone (PN) (IT)
(74) Representative: Giugni, Valter

(56) References cited:
- EP-A1- 3 725 493
- JP-A- 2017 013 310

## Description

### TECHNICAL FIELD OF THE INVENTION

The present invention relates to a method for making a composite element used for manufacturing structures or components preferably for the furnishing or construction industry. Specifically, the present invention relates to a method for manufacturing composite elements, which is simpler and more effective as compared to the conventional methods. Furthermore, the present invention relates to a composite element obtainable by means of such a method.

### STATE OF THE PRIOR ART

Known in the state of the art are elements used for manufacturing structures or components, preferably for the furnishing or construction industry, such as for example door and window jambs, cover strips, skirting boards, frames, furniture tops or doors, bed frame elements, containers and the like. Generally, the elements are made of wood-based materials, such as for example natural wood or the like.

When manufacturing the elements, there arises the need to provide a plurality of machining steps so as to ensure adequate structural and aesthetic characteristics at the same time. Specifically, the structural and aesthetic characteristics of the element depend on the type of material/s used for the manufacture thereof and, consequently, on the types of machining applied.

Generally, natural wood or solid wood which - once shaped with a shape adapted for application - is covered with a covering film, such as, for example, an adhesive film based on paper and/or other suitable materials is preferably used for making an element such as for example a door jamb. The covering film is flexible so as to be joined and conformed to the faces it covers and usually confers to the element a given aesthetic finish through a pattern, design, colour and the like. For example, a paper-based covering film on which is illustrated an image replicating the veins of a wooden body, therefore providing a "wood-effect" surface can be used. It is clear that this example is non-limiting and the covering film can achieve any desired aesthetic finish, such as for example a surface having a uniform colour.

However, obtaining an element whose faces do not have surface defects, thus guaranteeing aesthetic characteristics suitable for the application, requires carrying out multiple machining operations.

As a matter of fact, a natural wood generally has surface defects due, for example, to irregularities already present in the portion of wood from which it was obtained, such as knots, veining, depressions, projecting portions etc., or it has cutting irregularities produced during the shaping thereof etc. Furthermore, these surface defects are likely when the natural wood has a plurality of portions fixed to each other by means of gluing substances and/or fixing elements, generating joining lines, or surface defects, on the surface thereof.

In this state, when the flexible covering film is joined and conformed to the surface of natural wood, it copies the surface defects thereof that appear undesirably on its exposed surface and, consequently, on the visible surface of the element. These defects are undesirable, especially when the element has an aesthetic function, besides a structural function.

This drawback can be overcome by carrying out machining operations on the surface of natural wood, such as for example a step of covering defects with stucco and/or a step of fine sanding, so as to eliminate visible defects. Thus, in this state the covering film is joined and conformed to natural wood faces that are free of defects.

Although this method allows to obtain excellent results, a plurality of steps comprising the covering of multiple variously distributed defects with stucco and/or the fine sanding of the natural wood faces before joining to the flexible covering film are carried out. These are complex steps to perform, they are carried out using suitable equipment and they require time and specific skills by the operators.

Consequently, the manufacturing cost of the element increases undesirably and a consistency of the result is not guaranteed, especially when the multiple steps are carried out manually, such as for example the steps of covering the variously distributed defects with stucco. Furthermore, the sanding step requires removing and discarding large amounts of material, and this may be undesirable due to the cost of the natural wood used.

Document EP3725493 discloses a method for making a composite element comprising a core covered with a panel which is provided planar and upon which, when coupled to the core, folding channels configured to fold the panel onto the core are formed.

By suitably selecting the material with which the panel is formed, such as MDF, it is possible to obtain a composite element having adequate structural characteristics and surfaces free of defects, avoiding further processing. In particular, in this manner it is possible to obtain a composite element having a shell, formed by the panel, which continuously covers the core so as to provide excellent aesthetic characteristics. Furthermore, the shaping step of the folding channels on the external surface of the panel can be easily integrated with the handling, assembly, and folding steps carried out in an automatic apparatus.

However, although this method allows excellent results to be obtained, it is desirable to develop a further method which may be an alternative to this one in order to expand the range of methods of manufacturing composite elements comprising a core covered with a panel, making such a structure particularly versatile. It is also desirable to develop a further method that can provide increased precision in the forming phase of the composite element.

Thus, there arises the need for defining a method to be used to form a composite element capable of overcoming the drawbacks described above.

### SUMMARY OF THE INVENTION

The aim of the present invention is to define a method to be used to form a composite element comprising a core and a shell which at least partially covers two adjacent faces of the core and which is made in one piece starting from a panel. Subsequently, the outer surface of the shell can be associated with a flexible covering film.

Within the scope outlined above, an object relates to the development of a method to be used to form a composite element in which the shell is obtained by folding the panel substantially at the edges mutually connecting the two adjacent faces of the core to be covered. The method of the present invention provides for a step of forming folding channels on the panel substantially at the edges connecting the two adjacent faces of the core to be covered so as to facilitate bending of the panel. Specifically, in this state, the thickness of the panel is reduced at the folding channel so as to allow bending thereof without causing breakage.

A further object relates to the development of a method to be used to form a composite element in which the shell continuously covers the core at the edges mutually connecting two adjacent faces. In this state, it is possible to form a continuous surface of the shell which is therefore adapted to be covered by the flexible covering film also at the edges of the composite element, i.e. at the edges of the core.

A further object relates to the development of a method to be used to form a composite element in which the folding channels are formed on the inner surface of the panel. In this state, an increased precision of the arrangement of the folding channels is obtained with respect to the edges of the core, thus improving the coupling of the latter to the panel.

A further object relates to the development of a method to be used to form a composite element in which the cross-section of the core to be covered can have different shapes.

A further object relates to the development of a method to be used to form a composite element in which the number of steps and elements required to obtain it are minimal.

A further object relates to the development of a method to be used to form a composite element that is simple and that can be easily integrated in an automatic equipment, with evident advantages in terms of manufacturing costs.

The aim and objects outlined above, as well as other objects which will become apparent hereinafter from the description, are achieved by means of a method for making a composite element, as defined in claim 1, and the composite element obtainable with this method, as defined in claim 10.

### BRIEF DESCRIPTION OF THE FIGURES

The further characteristics and advantages of the method of the present invention, to be used to make a composite element, will become more apparent in the following description regarding embodiments provided purely by way of non-limiting example, with reference to the following figures, wherein:
- Fig. 1 is a schematic representation of a cross-section of a first composite element obtainable by means of the method of the present invention, according to a first embodiment;
- Fig. 2 is a schematic representation of a cross-section of a second composite element obtainable by means of the method of the present invention, according to a second embodiment;
- Fig. 3 is a schematic representation of a cross-section of a third composite element obtainable by means of the method of the present invention, according to a third embodiment;
- Fig. 4 is a schematic representation of a cross-section of a fourth composite element obtainable by means of the method of the present invention, according to a fourth embodiment;
- Fig. 5 is a schematic representation of a cross-section of a fifth composite element obtainable by means of the method of the present invention, according to a fifth embodiment;
- Figs. 6, 7, 8, 9, 10, 11, 12, 13, 14 and 15 are schematic representations of steps for making the composite element of Fig. 1 by means of the method of the present invention, in the first embodiment;
- Figs. 16, 17, 18, 19, 20, 21, 22, 23 and 24 are schematic representations of steps for making the composite element of Fig. 2 by means of the method of the present invention, in the second embodiment;
- Figs. 25, 26, 27, 28, 29, 30, 31, 32, 33 and 34 are schematic representations of steps for making the composite element of Fig. 3 by means of the method of the present invention, in the third embodiment;
- Figs. 35, 36, 37, 38, 39, 40, 41, 42, 43, 44, 45 and 46 are schematic representations of steps for making the composite element of Fig. 4 by means of the method of the present invention, in the fourth embodiment;
- Figs. 47, 48, 49, 50, 51, 52, 53, 54, 55 and 56 are schematic representations of steps for making the composite element of Fig. 5 by means of the method of the present invention, in the fifth embodiment.

### DETAILED DESCRIPTION OF THE INVENTION

The present invention relates to a composite element used for manufacturing structures or components preferably for the furnishing or construction industry. Specifically, a method for making a composite element, such as a jamb or a cover strip, which are extended bodies that at least partially define one of the side walls of a cavity in which a door is installed, will be outlined in the present description.

However, this embodiment shall not in any way be understood as limiting the field of application of the present invention and this can be applied to obtain further elements used for the creating structures or components preferably for the furnishing or construction industry, such as, for example, window jambs or cover strips, skirting boards, frames, doors or furniture tops, bed frame elements, containers and the like.

In the following description, the intersection of two faces of a body that are adjacent to each other will be defined as the "edge" of a body. Therefore, in the present description the edge defines a surface discontinuity line between two adjacent planar or curved faces, which define between them an internal angle comprised between 0 and 180 degrees, preferably between 0 and 150 degrees, even more preferably 90 degrees.

Furthermore, in the following description, a structure made of a material, or combination of materials, having a preferably rectangular shape defined by two larger flat surfaces, which are parallel to each other and separated by a thickness, will be defined as a "panel", or board. Further, the structure and material of the panel are rigid or semirigid such that the panel can be arched, or bent, within a certain degree but cannot be bent to form an edge.

Furthermore, in the following description the term "artificial composite wood", or engineered wood, will be used comprising a range of wood derived products, which are manufactured by binding or fixing fibres, particles, veneers or wooden boards to each other by means of adhesive agent, or by means of a binding substance, to form a composite material.

Furthermore, in the following description the term "natural wood", such as solid wood, will be used comprising a range of products derived from any portion of wood obtained from the trunk of a tree .

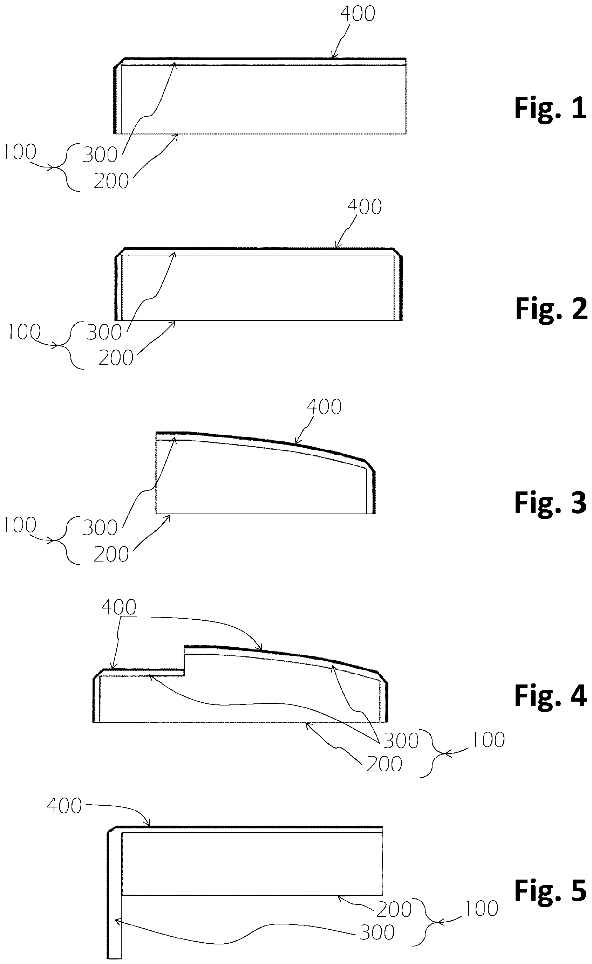

Figs. 1, 2, 3, 4 and 5 show cross-sections of composite elements 100, such as doorjambs or door cover strips, having different shapes from each other and which are formed according to the method of the present invention.

Specifically, the composite element 100 comprises a core 200 at least partially covered by a shell 300 on whose outer surface, i.e. on the surface operatively opposite to the core 200, a flexible covering film 400 can be associated.

### FIRST EMBODIMENT

In the first embodiment, with reference to Fig. 1, the core 200 is an extended body having a rectangular cross-section which is preferably made of natural wood, such as solid wood.

The shell 300 is an extended body made of a single piece which at least partially covers two adjacent faces of the core 200 and the edge which connects them. Specifically, the shell 300 has at least two adjacent portions which are made in one piece and which cover the respective said at least two faces of the core 200. Therefore, in this embodiment the shell 300 is shaped having a substantially "L"-shaped cross-section in which the two portions are arranged perpendicularly to each other. Advantageously, the shell 300 is obtained starting from a preferably planar panel, as explained below, and it is preferably made of artificial composite wood, such as MDF, which has smooth surfaces, i.e. free of defects. In the most preferred embodiment, the MDF panel has a thickness comprised between 0.5 and 3 mm, even more preferably between 0.5 and 1.5 mm.

Lastly, the flexible covering film 400 preferably covers the outer surface of the shell 300 and confers to the composite element 100 a desired characteristic, such as for example an aesthetic characteristic. In this embodiment, the flexible covering film 400 is made of adhesive paper preferably impregnated with melamine resins and it has a desired grammage, finish, tactile effect, gloss, etc. It is clear that the choice of the type of flexible covering film 400 is non-limiting while the materials and characteristics of the film can be the most suitable as a function of the application of the composite element 100.

The joining between the faces of the core 200 and the portions of the shell 300, and the joining between the outer surfaces of the shell 300 and the flexible covering film 400 are obtained by mutually fixing using gluing substances known in the state of the art.

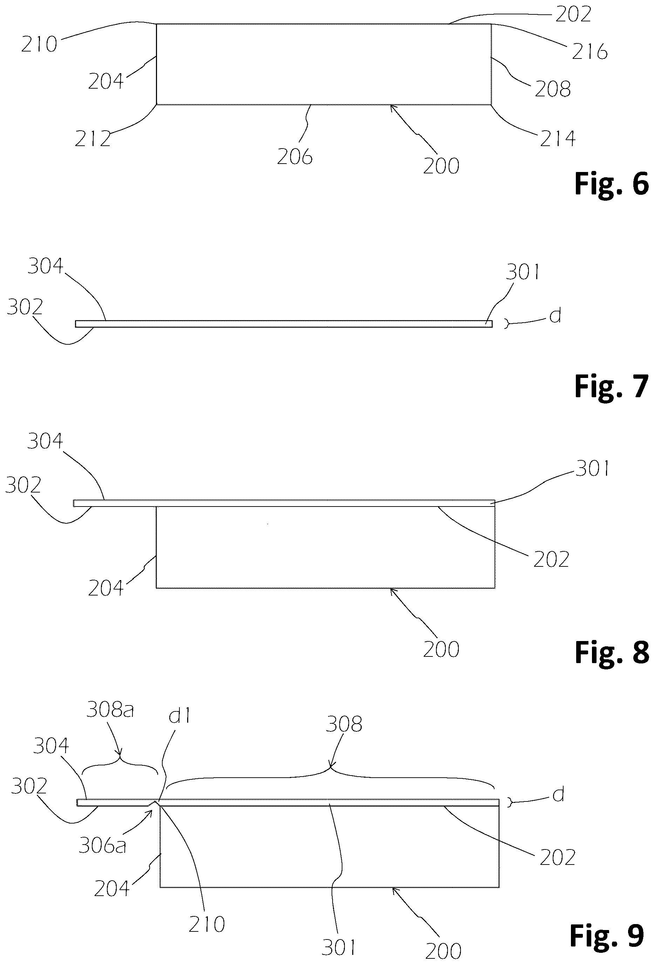

With reference to Figures 6 to 15, shown below is the method for making the composite element 100 of Fig. 1 according to the first embodiment.

### Step a).

Firstly, with reference to Fig. 6, provided is the core 200 which is shaped with a desired shape by means of known techniques. As stated above, in this embodiment the core 200 has a rectangular cross-section and it is preferably made of natural wood. Specifically, the core 200 comprises four main faces, a first face 202, a second face 204, a third face 206, and a fourth face 208. Furthermore, the faces arranged adjacent two-by-two and connected to each other through edges, respectively a first edge 210, a second edge 212, a third edge 214 and a fourth edge 216.

### Step b)

Subsequently, with reference to Fig. 7, provided for is a panel 301 in one piece which is dimensioned to cover a given surface region of the core 200. The panel 301, preferably made of artificial composite wood such as MDF, is adapted to cover a surface region of the core 200 which comprises at least one portion of at least two adjacent faces which are connected to each other by means of a respective edge. In this embodiment, the panel 301 is adapted to cover the first face 202, the second face 204 and the first edge 210 of the core 200.

Specifically, the panel 301 is provided with a preferably planar shape defined by two larger surfaces, respectively an inner surface 302 and an outer surface 304, which are parallel to each other and separated by a thickness d of the panel 301. As explained below, the inner surface 302 - in the operating conditions - is adapted to join the core 200, while the outer surface 304 - opposite the inner surface 302 - can be associated, by joining, with the flexible covering film 400.

### Step c)

Subsequently, with reference to Fig. 8, the panel 301 is coupled to the core 200 so that the first face 202 is at least partially joined to a portion of the inner surface 302 of the panel 301, leaving free another adjacent portion adapted to be coupled to the second face 204 of the core 200, as outlined hereinafter.

The joining between the first face 202 of the core 200 and the portion of the inner surface 302 of the panel 301 is achieved by means of a suitable gluing substance chosen from among those known in the state of the art. Preferably, the gluing substance is arranged beforehand on the inner surface 302 of the panel 301.

### Step d)

With reference to Fig. 9, after coupling the panel 301 and the core 200 together, a folding channel 306a is formed on the inner surface 302 of the panel 301. The folding channel 306a defines and connects together a first portion 308 and a second portion 308a, adjacent to each other, of the panel 301. Specifically, the first portion 308 is coupled and joined to the first face 202, i.e. it is operatively adapted to be joined to the first face 202 of the core 200, and the second portion 308a is operatively adapted to be joined to the second face 204 of the core 200.

The folding channel 306a is formed substantially at the first edge 210 which connects the first face 202 and the second face 204 of the core 200 together.

Furthermore, the folding channel 306a has a depth smaller than the thickness d of the panel 301 so as to leave the first portion 308 and the second portion 308a connected to each other through a reduced portion d1 of the thickness d which is substantially a weakened portion which is adapted to act as hinge under operating conditions as explained below. In the most preferred embodiment, the reduced portion d1 has a dimension preferably measuring about half the dimension of the thickness d.

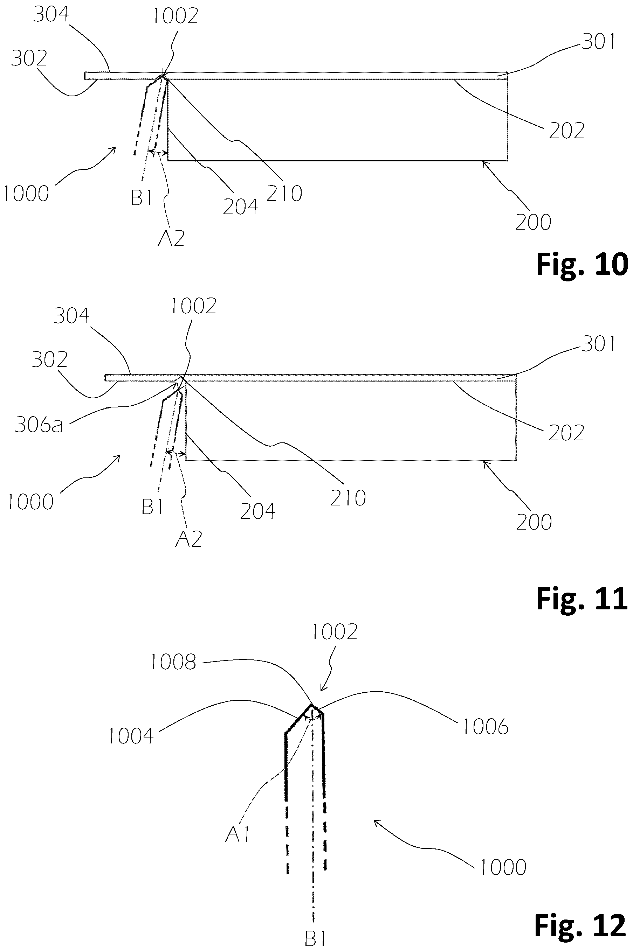

According to the present invention, referring in particular to Figs. 10 to 12, the folding channel 306a is formed by means of a cutting tool 1000.

The cutting tool 1000 is provided with a cutting edge 1002 comprising a first cutting edge portion 1004, preferably straight, and a second cutting edge portion 1006, preferably straight, consecutive to each other so as to define a cutting edge vertex 1008. The first cutting edge portion 1004 and the second cutting edge portion 1006 further define an internal angle A1 comprised between 110 and 70 degrees, preferably of 90 degrees. In Figs. 10 to 12 it is shown the portion of the cutting tool 1000 at the proximity of the cutting edge 1002, omitting the representation of the remaining portion.

In particular, a bisector B1 of said internal angle A1 operatively defines an engagement angle A2 comprised between 3 and 20 degrees, preferably between 5 and 15 degrees, with the second face 204 which is adjacent to the first face 202 which it is at least partially joined to the inner surface 302 of said panel 301.

Preferably, the first cutting edge portion 1004 has a greater extension (i.e. surface area) than the second cutting edge portion 1006 and, in operating conditions, the latter is arranged closer to the second face 204 than the first cutting edge portion 1004.

The cutting tool 1000 may be any suitable tool, such as for example a circular saw whose peripheral edge defines the cutting edge 1002 and which, in operating conditions, rotates around a rotation axis preferably substantially orthogonal to the bisector B1 of said internal angle A1. However, this selection is not limiting, and the cutting tool 1000 may provide further constructions, such as for example a straight blade adapted to cut the inner surface 302 of the panel 301 moving longitudinally to the core 200 (i.e. along a direction perpendicular to the sheet in Figs. 10 and 11).

Advantageously, in this state it is possible to form a folding channel 306a having a geometry adapted for allowing a folding of the panel 301. Furthermore, in this state, the overall size of the cutting tool 1000 does not interfere with the core 200, with the panel 301 and with the automatic apparatus which induces the movement, assembly and folding of the latter.

It should be noted that, having been placed the gluing substance in step c) on the inner surface 302 of the panel 301, in this step d) in which the folding channel 306a is formed by material removal by means of a cutting tool 1000, the latter removes also the gluing substance at the folding channel 306a. In this state, advantageously, an excess of gluing substance is eliminated which, in the subsequent folding step, could be squeezed out and undesirably come out towards the outer surface 304 of the panel 301, causing a defect that could be removed with further processing.

### Step e)

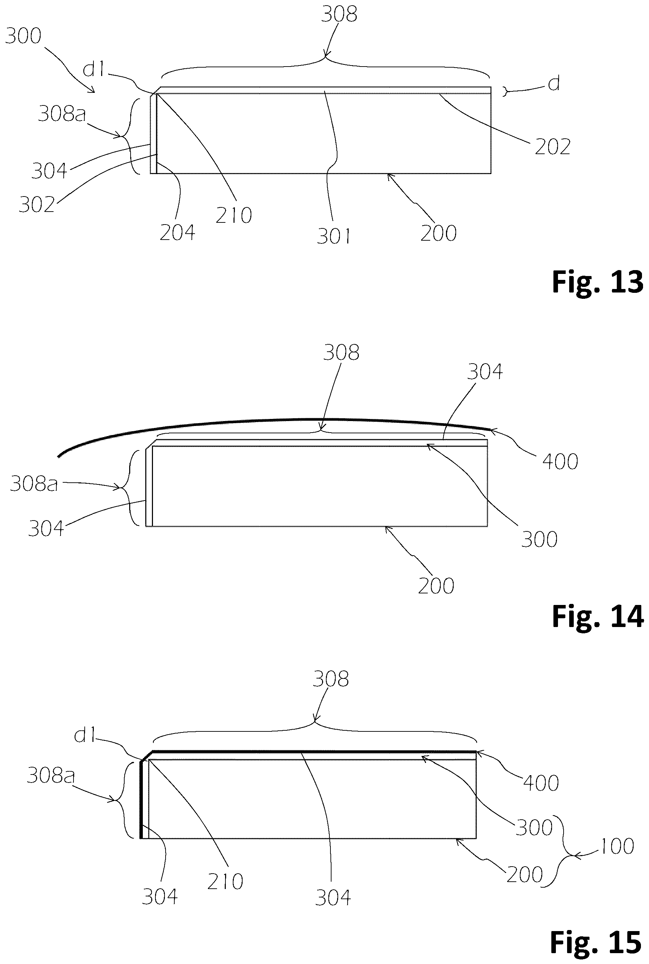

Subsequently, with reference to Fig. 13, the panel 301 is bent along the folding channel 306a so as to join the portion of the inner surface 302 of the second portion 308a to the second face 204 of the core 200. In other words, the panel 301 is bent along the folding channel 306a so as to join the portion of the inner surface 302 of each of the first portion 308 and the second portion 308a to the corresponding between the first face 202 and the second face 204 of the core 200.

In this state, the shell 300 which covers the core 200 of the composite element 100 is formed. Specifically, the shell 300 is made of a single piece starting from the panel 301, by folding, so as to form a shell having a substantially "L"-shaped cross-section.

Advantageously, the folding channel 306a defines the reduced portion d1 of the thickness d of the panel 301 which has an extension adapted to allow the bending thereof. Specifically, the bending is carried out, without causing the panel 301 to break, by rotating the second portion 308a with respect to the first portion 308 around an axis substantially coinciding with the folding channel 306a. In other words, the reduced portion d1 of the thickness d is adapted to act as a rotation hinge which connects the first portion 308 and the second portion 308a of the panel 301 together.

Advantageously, the depth of the folding channel 306a, i.e. the extension of the reduced portion d1 of the thickness d, is adjusted according to the material that the panel 301 is made of so as to allow its bending without causing it to break.

In the most preferred embodiment, the panel 301 is made of an artificial composite wood comprising fibres and/or wood particles bound using an adhesive agent, or using a binding substance, such as for example an MDF panel. In this state, the reduction d1 of the thickness d and the glue that binds the fibres/particles advantageously cooperate, facilitating the bending of the panel 301 by means of the deformation characteristics guaranteed by the combination of the adhesive agent with the fibres and/or wood particles. In the most preferred embodiment, the reduced portion d1 has a dimension measuring about half the thickness d, thus ensuring deformation and integrity of the panel 301 at the folding channel 306a during bending.

Without wishing to be bound by theory, an artificial composite wood comprising fibres and/or wood particles bound by an adhesive agent, such as MDF, has a greater percentage by weight of adhesive agent inside the thickness d of the panel 301 with respect to the inner 302 and outer 304 surfaces thereof, which - on the other hand - contain a higher percentage by weight of fibre or wood particles. In this state, the inner portion of the panel 301 is plastically deformed in a simpler manner than the inner surface 302 and the outer surface 304 which, being stiffer, would resist against deformation causing the panel 301 to break when folded. Therefore, by forming the folding channel 306a on the inner surface 302, or by removing the corresponding surface portion thereof, the panel 301 is prevented from breaking when the latter is folded along the folding channel 306a.

The joining between the second face 204 of the core 200 and the respective portion of the inner surface 302 of the panel 301 is achieved by means of a suitable gluing substance chosen from among those known in the state of the art.

### Step f)

With reference to Fig. 14, after forming the shell 300 of the composite element 100, provided is the flexible covering film 400 which is dimensioned to cover at least a portion of the outer surface 304 of the first portion 308 and of the second portion 308a of the panel 301.

In this embodiment, the flexible covering film 400 is made of adhesive paper preferably impregnated with melamine resins and it has a desired grammage, finish, tactile effect, gloss, etc, so as to provide a desired aesthetic characteristic to the composite element 100.

### Step g)

Subsequently, with reference to Fig. 15, the flexible covering film 400 is joined to the outer surface 304 of at least one from among the first portion 308 and the second portion 308a of the panel 301.

In this state, the flexible covering film 400 is advantageously joined and conformed to the outer surface 304 of the shell 300, i.e. of the bent panel 301, which is free of defects. Furthermore, at the first edge 210, the panel 301 continuously covers the core 200 by means of the reduced portion d1 of the thickness d which connects the first portion 308 to the second portion 308a of the panel 301.

It is clear that the present invention can be obtained through other embodiments without departing from the scope claimed.

Described below are further embodiments of the present invention which provide for modifications relating to some steps of forming the composite element 100. Therefore, the elements and steps for making the composite element 100 which are substantially unchanged, or which perform the same function, will not be described in detail again and the same reference numbers will be used.

### SECOND EMBODIMENT

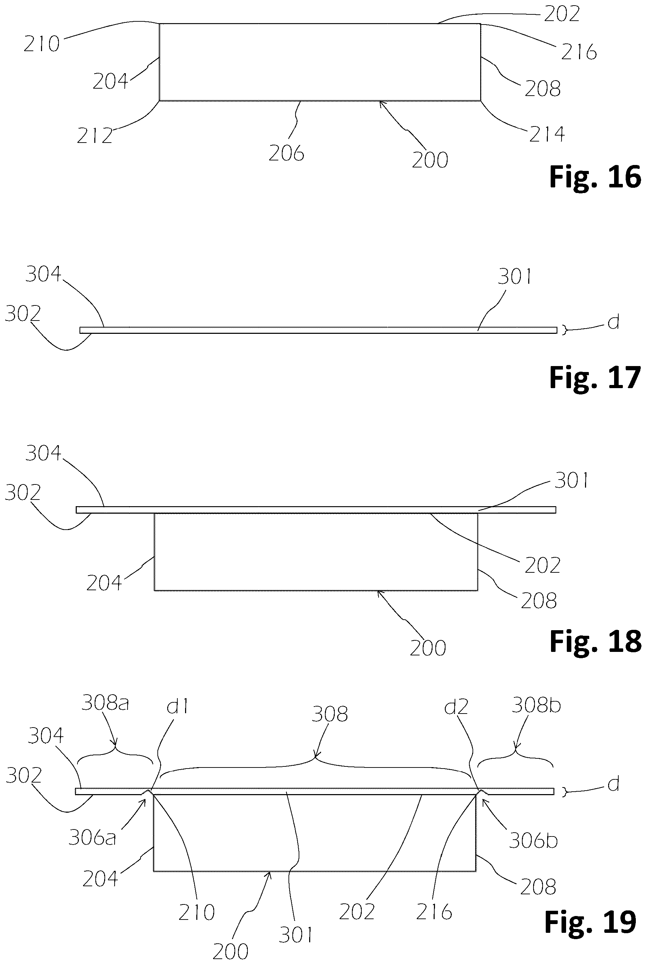

With reference to Figs. 16 to 24, shown is the method for making the composite element 100 shown in Fig. 2.

In this embodiment, like in the first embodiment, the core 200 is an extended body having a rectangular cross-section.

The shell 300, instead, is an extended body made of a single piece which at least partially covers three adjacent faces of the core 200 and two edges which connect them. Therefore, in this embodiment the shell 300 is shaped having a substantially "U"-shaped cross-section.

Lastly, the flexible covering film 400 preferably covers the outer surface of the shell 300 and provides to the composite element 100 a desired characteristic, such as for example an aesthetic characteristic, like in the first embodiment.

With reference to Figs. 16 to 24, shown below is the method for making the composite element 100 of Fig. 2 according to the second embodiment.

### Step a)

First of all, with reference to Fig. 16, like in the first embodiment, provided is the core 200 which is shaped having a rectangular cross-section. Specifically, the core 200 comprises four main faces, a first face 202, a second face 204, a third face 206 and a fourth face 208, which are arranged adjacent two-by-two and connected to each other through edges, respectively a first edge 210, a second edge 212, a third edge 214 and a fourth edge 216.

### Step b)

With reference to Fig. 17, like in the first embodiment, provided for is a panel 301 in one piece which is dimensioned to cover a given surface region of the core 200. In this embodiment, the panel 301 is adapted to cover the first face 202, the second face 204, the fourth face 208, the first edge 210 and the fourth edge 216 of the core 200.

Specifically, the panel 301 is provided with a preferably planar shape defined by two larger surfaces, respectively an inner surface 302 and an outer surface 304, which are parallel to each other and separated by a thickness d of the panel 301.

### Step c)

Subsequently, with reference to Fig. 18, the panel 301 is coupled to the core 200 so that the first face 202 is at least partially joined to a portion of the inner surface 302 of the panel 301, leaving free two end portions adapted to be coupled respectively to the second face 204 and to the fourth face 208 of the core 200, as outlined hereinafter.

### Step d)

With reference to Fig. 19, after coupling the panel 301 and the core 200 together, a first folding first channel 306a and a second folding channel 306b are formed on the inner surface 302 of the panel 301. The first folding channel 306a defines and connects together a first portion 308 and a second portion 308a adjacent to each other, while the second folding channel 306b defines and connects together the first portion 308 and a third portion 308b adjacent to each other.

The first folding channel 306a and the second folding channel 306b are formed substantially at the first edge 210 and the fourth edge 216, respectively, which connect the first face 202 and, respectively, the second face 204 and the fourth face 208 of the core 200 together.

Furthermore, the first folding channel 306a and the second folding channel 306b connect together the first portion 308 to the second portion 308a and to the third portion 308b by means of a reduced portion of the thickness d, respectively the first reduced portion d1 and the second reduced portion d2, which are adapted to act as hinge under operating conditions.

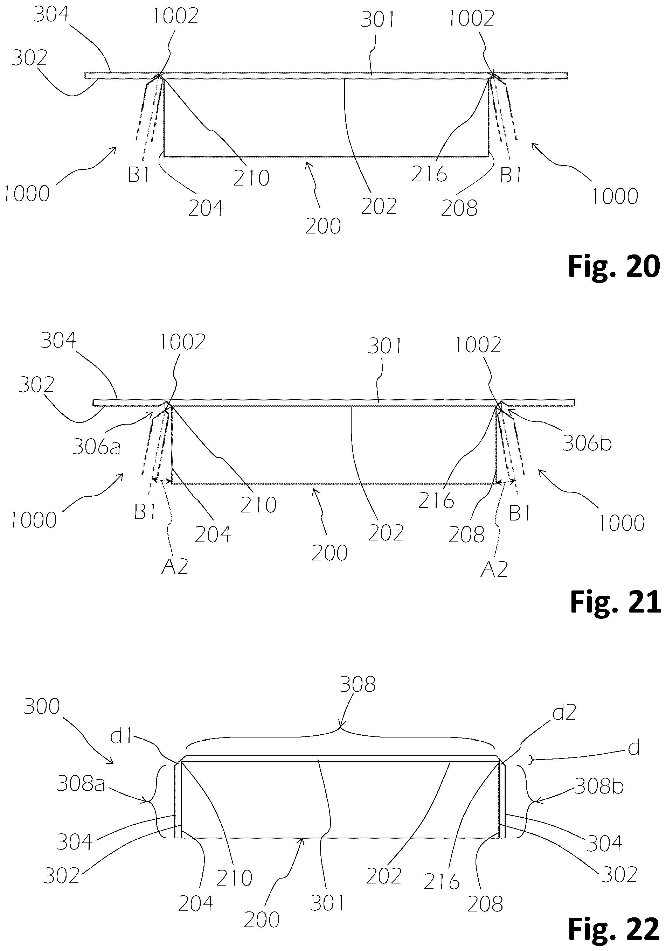

As in the first embodiment, according to the present invention, referring in particular to Figs. 20 and 21 together with Fig. 12, the first folding channel 306a and the second folding channel 306b are formed by means of respective cutting tools 1000.

The cutting tool 1000 is provided with a cutting edge 1002 comprising a first cutting edge portion 1004 and a second cutting edge portion 1006 consecutive so as to define a cutting edge vertex 1008. The first cutting edge portion 1004 and the second cutting edge portion 1006 further define an internal angle A1 comprised between 110 and 70 degrees, preferably of 90 degrees.

In particular, a bisector B1 of said internal angle A1 of each cutting tool 1000 operatively defines an engagement angle A2 comprised between 3 and 20 degrees, preferably comprised between 5 and 15 degrees, with the respective second face 204 and fourth face 208 which are adjacent to the first face 202 which is at least partially joined to the inner surface 302 of said panel 301.

### Step e)

Subsequently, with reference to Fig. 22, the panel 301 is bent along the first folding channel 306a and the second folding channel 306b so as to join the portion of the inner surface 302 of the second portion 308a and of the third portion 308b, respectively, to the second face 204 and to the fourth face 208 of the core 200.

In this state, the shell 300 which covers the core 200 of the composite element 100 is formed. Specifically, the shell 300 is made of a single piece starting from the panel 301, by folding, so as to form a shell having a substantially "U"-shaped cross-section.

### Step f)

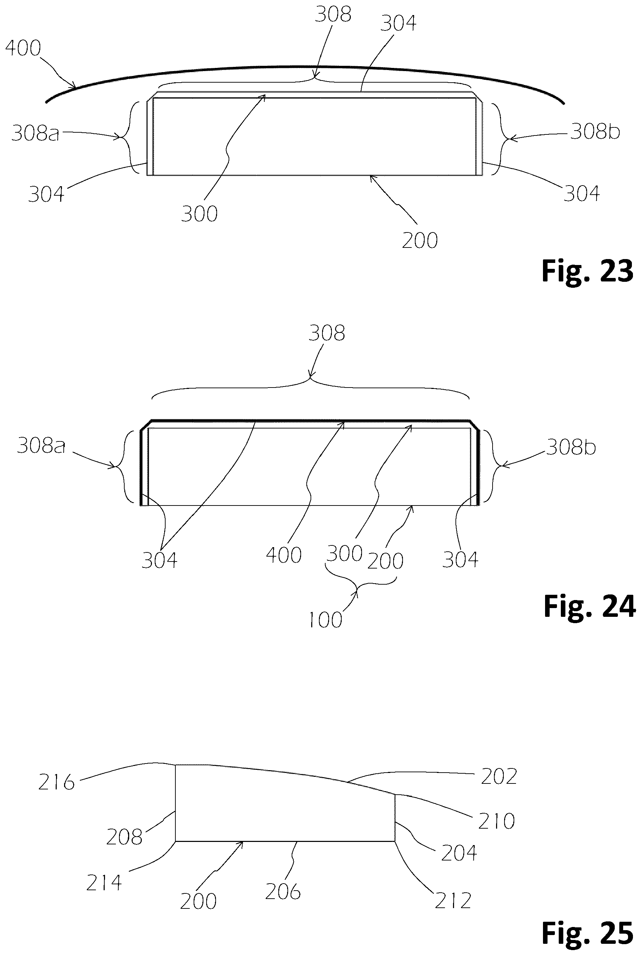

With reference to Fig. 23, after forming the shell 300 of the composite element 100, provided is the flexible covering film 400 which is dimensioned to cover at least a portion of the outer surface 304 of the first portion 308, of the second portion 308a and of the third portion 308b of the panel 301.

### Step g)

Subsequently, with reference to Fig. 24, the flexible covering film 400 is joined to the outer surface 304 of at least one from among the first portion 308, the second portion 308a and the third portion 308b of the panel 301.

### THIRD EMBODIMENT

With reference to Figs. 25 to 34, shown is the method for making the composite element 100 shown in Fig. 3.

In this embodiment, unlike the first embodiment, the core 200 is an extended body having a quadrilateral-shaped cross-section, wherein one of the faces is curved.

The shell 300, like in the first embodiment, is an extended body made of a single piece which at least partially covers two adjacent faces of the core 200 and the edge which connects them. Therefore, in this embodiment the shell 300 is shaped having a substantially "L"-shaped cross-section.

Lastly, the flexible covering film 400 preferably covers the outer surface of the shell 300 and provides to the composite element 100 a desired characteristic, such as for example an aesthetic characteristic, like in the previous embodiments.

With reference to Figs. 25 to 34, shown below is the method for making the composite element 100 of Fig. 3 according to the third embodiment.

### Step a)

Firstly, with reference to Fig. 25, provided is the core 200 which is shaped with a desired shape by means of known techniques. As mentioned, in this embodiment the core 200 comprises four main faces, a first face 202, a second face 204, a third face 206 and a fourth face 208, which are arranged adjacent two-by-two and connected to each other through edges, respectively a first edge 210, a second edge 212, a third edge 214 and a fourth edge 216. Specifically, unlike the first embodiment, the first face 202 is not planar but is curved, that is, it defines - in cross-section - an arc with a given radius of curvature.

### Step b)

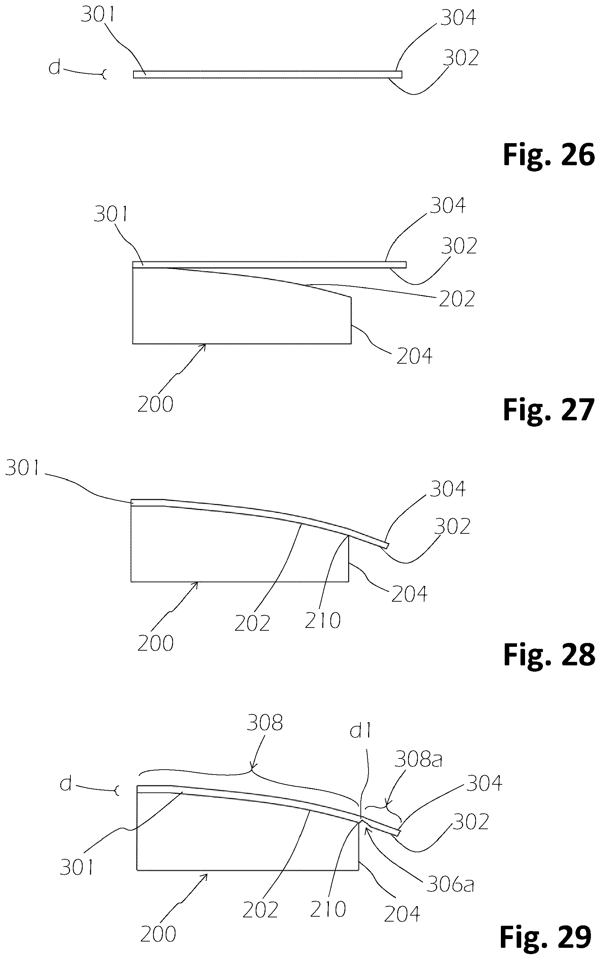

With reference to Fig. 26, like in the previous embodiments, provided for is a panel 301 in one piece which is dimensioned to cover a given surface region of the core 200. In this embodiment, the panel 301 is adapted to cover the first face 202, the second face 204 and the first edge 210 of the core 200.

Specifically, the panel 301 is provided with a preferably planar shape defined by two larger surfaces, respectively an inner surface 302 and an outer surface 304, which are parallel to each other and separated by a thickness d of the panel 301.

### Step c)

Subsequently, with reference to Fig. 27, the panel 301 is coupled to the core 200 so that the first face 202 is at least partially joined to a portion of the inner surface 302 of the panel 301, leaving free another adjacent portion adapted to be coupled to the second face 204 of the core 200, as outlined hereinafter.

### Step c')

Subsequently, with reference to Fig. 28, the panel 301 is coupled to the core 200 so that the first face 202 is preferably fully joined to a portion of the inner surface 302 of the panel 301, leaving free another adjacent portion adapted to be coupled to the second face 204 of the core 200.

Specifically, in this step the panel 301 is bent by a certain degree, without breaking it, thanks to the deformation of the material that it is made of. In other words, the panel 301 is bent, i.e. conformed to the curvature of the first face 202, by applying a pressure.

### Step d)

With reference to Fig. 29, after coupling the panel 301 and the core 200 together, a folding channel 306a is formed on the inner surface 302 of the panel 301. The folding channel 306a defines and connects together a first portion 308 and a second portion 308a adjacent to each other.

The first folding channel 306a is formed substantially respectively at the first edge 210 which connects the first face 202 and the second face 204 of the core 200 together.

Furthermore, the first folding channel 306a connects the first portion 308 and the second portion 308a together through a reduced portion d1 of the thickness d which is adapted to act as hinge under operating conditions.

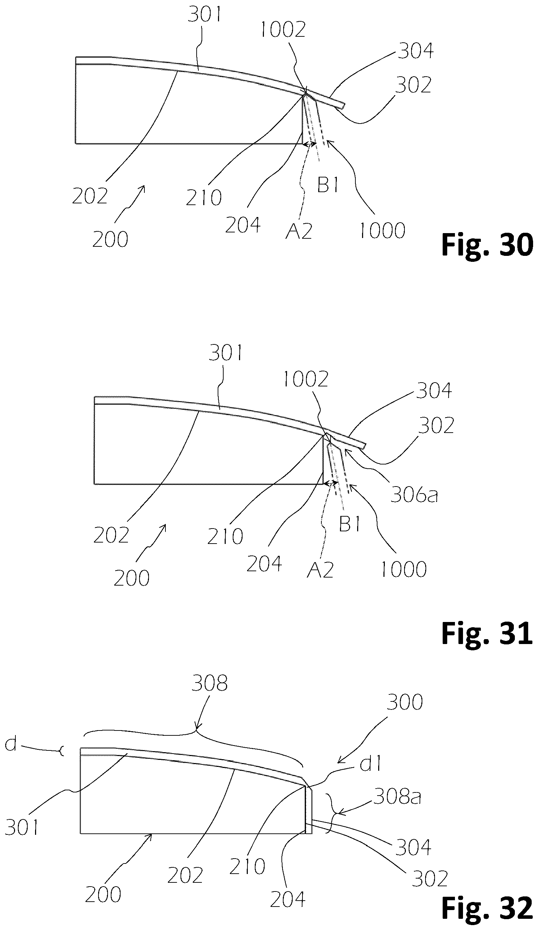

As in the first embodiment, according to the present invention, referring in particular to Figs. 30 and 31 together with Fig. 12, the first folding channel 306a is formed by means of a cutting tool 1000.

The cutting tool 1000 is provided with a cutting edge 1002 comprising a first cutting edge portion 1004 and a second cutting edge portion 1006 consecutive so as to define a cutting edge vertex 1008. The first cutting edge portion 1004 and the second cutting edge portion 1006 further define an internal angle A1 comprised between 110 and 70 degrees, preferably of 90 degrees.

In particular, a bisector B1 of said internal angle A1 operatively defines an engagement angle A2 comprised between 3 and 20 degrees, preferably comprised between 5 and 15 degrees, with the second face 204 which is adjacent to the first face 202 which is at least partially joined to the inner surface 302 of said panel 301.

### Step e)

Subsequently, with reference to Fig. 32, the panel 301 is bent along the folding channel 306a so as to join the portion of the inner surface 302 of the second portion 308a to the second face 204 of the core 200.

In this state, the shell 300 which covers the core 200 of the composite element 100 is formed. Specifically, the shell 300 is made of a single piece starting from the panel 301, by folding, so as to form a shell having a substantially "L"-shaped cross-section.

### Step f)

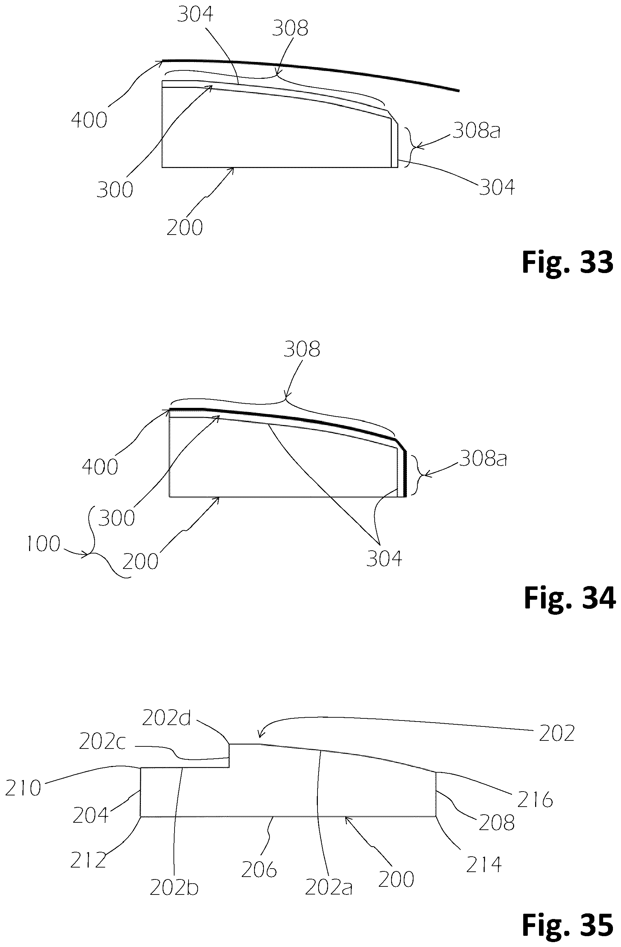

With reference to Fig. 33, after forming the shell 300 of the composite element 100, provided is a flexible covering film 400 which is dimensioned to cover at least a portion of the outer surface 304 of the first portion 308 and of the second portion 308a of the panel 301.

### Step g)

Subsequently, with reference to Fig. 34, the flexible covering film 400 is joined to the outer surface 304 of at least one from among the first portion 308 and the second portion 308a.

### FOURTH EMBODIMENT

With reference to Figs. 35 to 46, shown is the method for making the composite element 100 shown in Fig. 4.

In this embodiment, unlike the first embodiment, the core 200 is an extended body having a quadrilateral-shaped cross-section, wherein one of the faces has an extended recess forming a step.

The shell 300, like in the previous embodiments, is an extended body obtained starting from single piece which at least partially covers three adjacent faces of the core 200 comprising the step. As explained below, in this embodiment, the shell 300 consists of two portions, obtained from the same panel 301, each of which has a substantially "L"-shaped cross-section and which cover the two planes of the step and the respective adjacent faces.

Lastly, the flexible covering film 400 preferably covers the outer surface of the shell 300 and provides to the composite element 100 a desired characteristic, such as for example an aesthetic characteristic, like in the previous embodiments.

With reference to Figs. 35 to 46, shown below is the method for making the composite element 100 of Fig. 4 according to the fourth embodiment.

### Step a)

Firstly, with reference to Fig. 35, provided is the core 200 which is shaped with a desired shape by means of known techniques. As mentioned, in this embodiment the core 200 comprises four main faces, a first face 202, a second face 204, a third face 206 and a fourth face 208, which are arranged adjacent two-by-two and connected to each other through edges, respectively a first edge 210, a second edge 212, a third edge 214 and a fourth edge 216. Specifically, unlike the previous embodiments, the first face 202 is not planar but it comprises a first curved portion 202a and a second step-like portion having a tread 202b, adjacent to the first edge 210, and a riser 202c wherein the curved portion 202a is connected to the tread 202c through a corner 202d of the step.

### Step b)

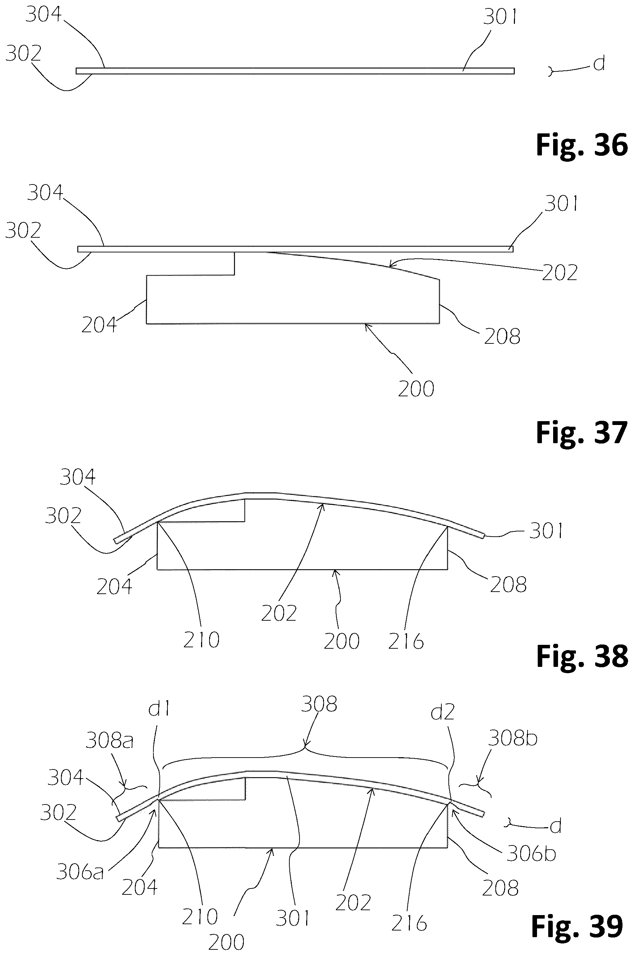

With reference to Fig. 36, like in the previous embodiments, provided for is a panel 301 in one piece which is dimensioned to cover a given surface region of the core 200. In this embodiment, the panel 301 is adapted to substantially cover the first face 202, the second face 204, the fourth face 208, the first edge 210 and the fourth edge 216 of the core 200.

Specifically, the panel 301 is provided with a preferably planar shape defined by two larger surfaces, respectively an inner surface 302 and an outer surface 304, which are parallel to each other and separated by a thickness d of the panel 301.

### Step c)

Subsequently, with reference to Fig. 37, the panel 301 is coupled to the core 200 so that the first face 202 is at least partially joined to a portion of the inner surface 302 of the panel 301, leaving free two end portions adapted to be coupled to the second face 204 and to the fourth face 208 of the core 200, as outlined hereinafter.

### Step c')

Subsequently, with reference to Fig. 38, the panel 301 is coupled to the core 200 so that the curved portion 202a of the first face 202 is preferably fully joined to a portion of the inner surface 302 of the panel 301, leaving free another adjacent portion adapted to be coupled to the fourth face 208 of the core 200.

Specifically, in this step the panel 301 is bent by a certain degree, without breaking it, thanks to the deformation of the material that it is made of. In other words, the panel 301 is bent, i.e. conformed to the curvature of the curved portion 202a of the first face 202, by applying a pressure.

Furthermore, the panel 301 is bent so as to bring it into contact with, or to approach it to, the first edge 210 of the core 200, leaving free a portion thereof adapted to be coupled to the second face 204 of the core 200.

### Step d)

With reference to Fig. 39, after coupling the panel 301 and the core 200 together, a first folding first channel 306a and a second folding channel 306b are formed on the inner surface 302 of the panel 301. The first folding channel 306a defines and connects together a first portion 308 and a second portion 308a adjacent to each other, while the second folding channel defines and connects together the first portion 308 and a third portion 308b adjacent to each other.

The first folding channel 306a and the second folding channel 306b are formed substantially at the first edge 210 and the fourth edge 216, respectively, which connect the first face 202 and, respectively, the second face 204 and the fourth face 208 of the core 200 together.

Furthermore, the first folding channel 306a and the second folding channel 306b connect together the first portion 308 and to the second 308a by means of a reduced portion of the thickness d, respectively the first reduced portion d1 and the second reduced portion d2, which are adapted to act as hinge under operating conditions.

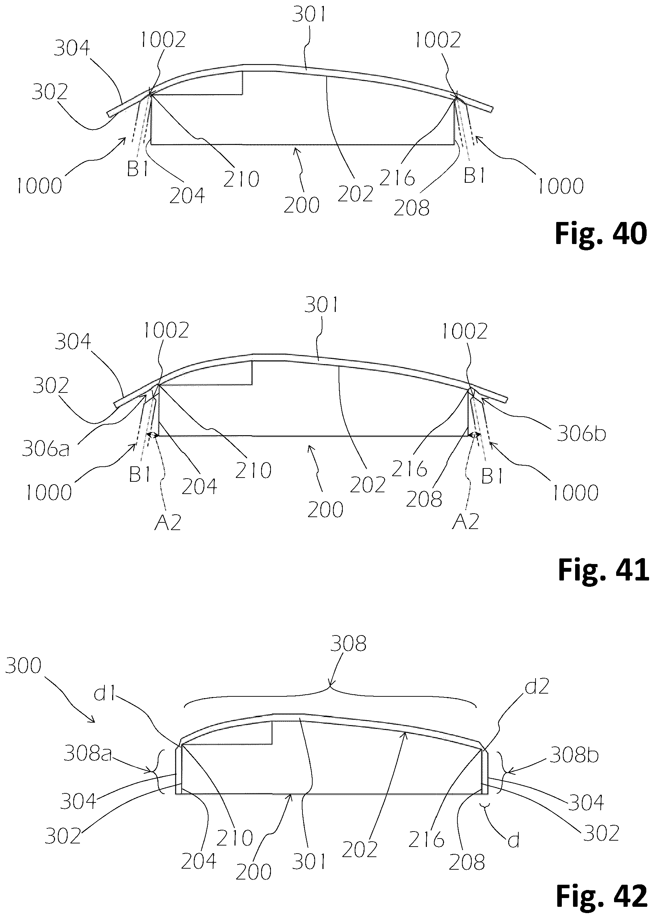

As in the second embodiment, according to the present invention, referring in particular to Figs. 40 and 41 together with Fig. 12, the first folding channel 306a and the second folding channel 306b are formed by means of respective cutting tools 1000.

The cutting tool 1000 is provided with a cutting edge 1002 comprising a first cutting edge portion 1004 and a second cutting edge portion 1006 consecutive so as to define a cutting edge vertex 1008. The first cutting edge portion 1004 and the second cutting edge portion 1006 further define an internal angle A1 comprised between 110 and 70 degrees, preferably of 90 degrees.

In particular, a bisector B1 of said internal angle A1 of each cutting tool 1000 operatively defines an engagement angle A2 comprised between 3 and 20 degrees, preferably comprised between 5 and 15 degrees, with the respective second face 204 and fourth face 208 which are adjacent to the first face 202 which is at least partially joined to the inner surface 302 of said panel 301.

### Step e)

Subsequently, with reference to Fig. 42, the panel 301 is bent along the first folding channel 306a and the second folding channel 306b so as to join the portion of the inner surface 302 of the second portion 308a and of the third portion 308b, respectively, to the second face 204 and to the fourth face 208 of the core 200.

In this state, the shell 300 which covers the core 200 of the composite element 100 is formed. Specifically, the shell 300 is made of a single piece starting from the panel 301, by folding, so as to form a shell having a substantially "U"-shaped cross-section.

### Step e')

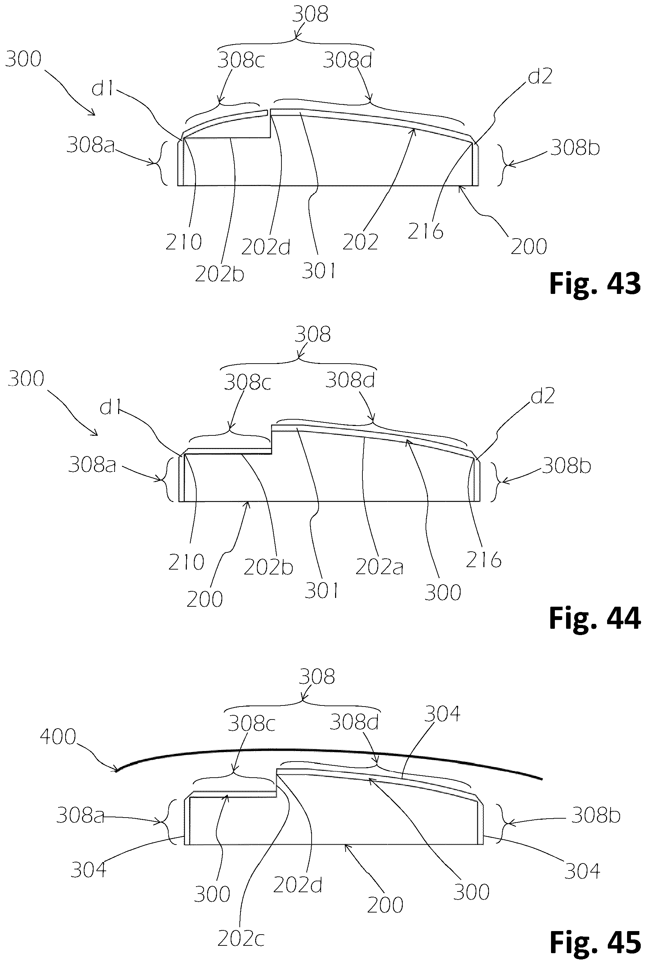

Subsequently, with reference to Fig. 43, the panel 301 is cut substantially at the corner 202d of the core 200. In this state, the first portion 308a is divided into a suspended portion 308c and an adherent portion 308d. Specifically, the adherent portion 308d is the portion which - in step c') - is adherent to, or joined to, the curved portion 202a of the first face 202, while the suspended portion 308c faces, or corresponds to, the tread 202b of the first face 202 and is spaced from the latter.

### Step e")

With reference to Fig. 44, the panel 301 is bent along the first folding channel 306a so as to join the portion of the inner surface 302 of the suspended portion 308c to the tread 202b of the core 200.

It should be observed that, as previously described in step e'), in this step e") the portion of the inner surface 302 of the adherent portion 308d is already joined to the curved portion 202a of the core 200.

### Step f)

With reference to Fig. 45, after forming two portions of the shell 300 of the composite element 100, provided is the flexible covering film 400 which is dimensioned to cover at least a portion of the outer surface 304 of the suspended portion 308c, of the adherent portion 308d, of the second portion 308a and of the third portion 308b of the panel 301.

### Step g)

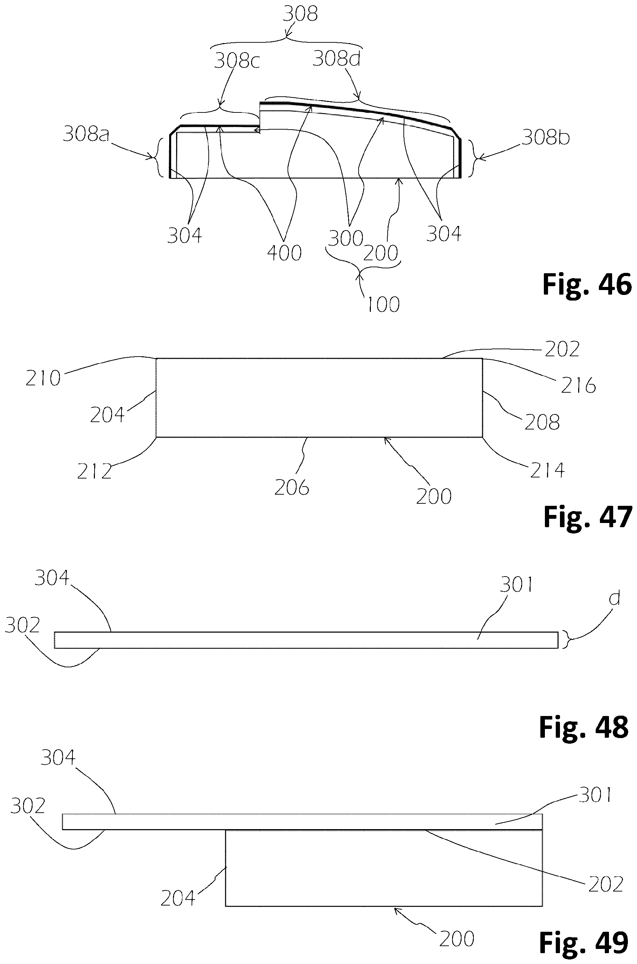

Subsequently, with reference to Fig. 46, the flexible covering film 400 is joined to the outer surface 304 of at least one from among the suspended portion 308c, the adherent portion 308d, the second portion 308a and the third portion 308b of the panel 301.

Specifically, still with reference to Figs. 45 and 46, the flexible covering film 400 is cut at the corner 202d, however, it is possible to provide an embodiment in which the flexible covering film 400 is not cut and it also covers the riser 202c of the step of the core 200. Furthermore, in a further embodiment, a gasket is fixed at the riser 202c; this embodiment is particularly convenient when the composite element 100 is used for providing a door jamb in which the tread 202b and the riser 202c are the surfaces of the composite element 100 adapted to receive the door when the latter is closed on the jamb.

### FIFTH EMBODIMENT

With reference to Figs. 47 to 56, shown is the method for making the composite element 100 shown in Fig. 5.

In this embodiment, like in the first embodiment, the core 200 is an extended body having a rectangular cross-section.

The shell 300, on the other hand, is an extended body made of a single piece which at least partially covers two adjacent faces of the core 200 and the edge which connects them, wherein one of the two portions of the shell 300 extends beyond a face which it covers so as to protrude from the latter. Therefore, in this embodiment the shell 300 is shaped having a substantially "L"-shaped cross-section in which the two portions shell 300 are arranged perpendicularly to each other and one of the latter protrudes from the face of the core 200 that it covers.

Specifically, in this embodiment the protruding portion of the shell 300 has a greater thickness with respect to that of the other portion. This embodiment is particularly suitable when the shell 300 acts as a structural reinforcement element of the composite element 100 and/or the protruding part thereof is adapted to engage suitable seats, and therefore it should have a predetermined and relatively high thickness. In the preferred embodiment, the shell 300, made of artificial composite wood such as MDF, has a thickness equal to or greater than 3.0 mm at the protruding portion and a thickness smaller than or equal to 2 mm at the other portion.

Lastly, the flexible covering film 400 preferably covers the outer surface of the shell 300 and confers to the composite element 100 a desired characteristic, such as for example an aesthetic characteristic, like in the first embodiment.

With reference to Figs. 47 to 56, shown below is the method for making the composite element 100 of Fig. 5 according to the fifth embodiment.

### Step a)

First of all, with reference to Fig. 47, like in the first embodiment, provided is the core 200 which is shaped having a rectangular cross-section. Specifically, the core 200 comprises four main faces, a first face 202, a second face 204, a third face 206 and a fourth face 208, which are arranged adjacent two-by-two and connected to each through edges, respectively a first edge 210, a second edge 212, a third edge 214 and a fourth edge 216.

### Step b)

With reference to Fig. 48, like in the first embodiment, provided for is a panel 301 in one piece which is dimensioned to cover a given surface region of the core 200. In this embodiment, the panel 301 is adapted to cover the first face 202, the first edge 210 and the second face 204 so as to extend protruding from the latter beyond the second edge 212.

Specifically, the panel 301 is provided with a preferably planar shape defined by two larger surfaces, respectively an inner surface 302 and an outer surface 304, which are parallel to each other and separated by a thickness d of the panel 301 which, in the most preferred embodiment, is equal to or greater than 3.0 mm.

### Step c)

Subsequently, with reference to Fig. 49, the panel 301 is coupled to the core 200 so that the first face 202 is at least partially joined to a portion of the inner surface 302 of the panel 301, leaving free another adjacent portion adapted to be coupled to the second face 204 of the core 200, as outlined hereinafter.

### Step d)

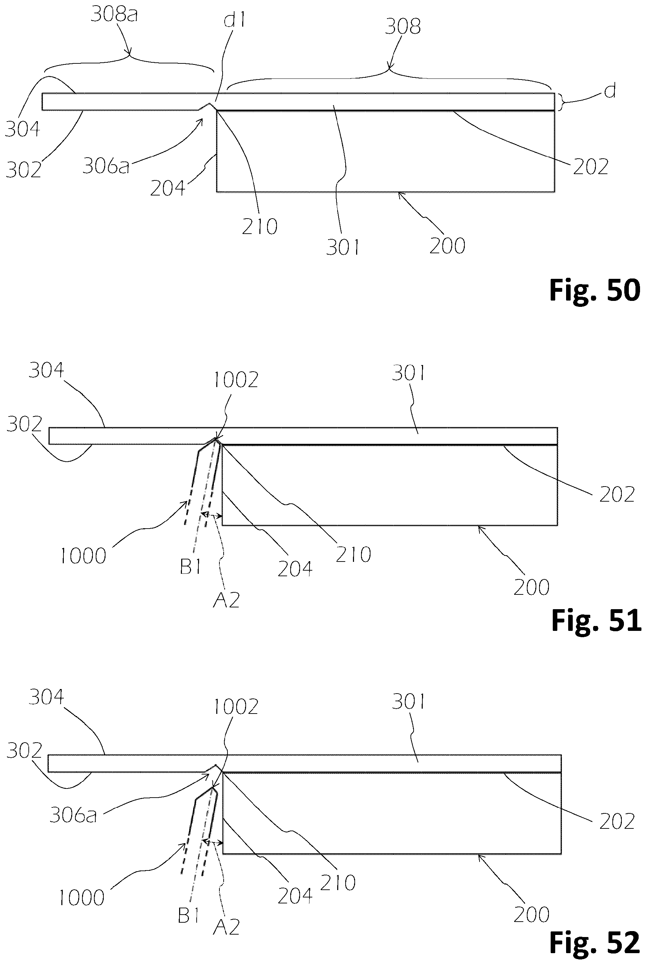

With reference to Fig. 50, after coupling the panel 301 and the core 200 together, a folding channel 306a is formed on the inner surface 302 of the panel 301. The folding channel 306a defines and connects together a first portion 308 and a second portion 308a, adjacent to each other, of the panel 301. Specifically, the first portion 308 is coupled and joined to the first face 202, i.e. it is operatively adapted to be joined to the first face 202 of the core 200, and the second portion 308a is operatively adapted to be joined to the second face 204 of the core 200, protruding from the latter.

The folding channel 306a is formed substantially at the first edge 210 which connects the first face 202 and the second face 204 of the core 200 together.

Furthermore, the folding channel 306a connects the first portion 308 and the second portion 308a together through a reduced portion d1 of the thickness d which is adapted to act as a hinge under operating conditions.

As in the first embodiment, according to the present invention, referring in particular to Figs. 51 and 52 together with Fig. 12, the first folding channel 306a is formed by means of a cutting tool 1000.

The cutting tool 1000 is provided with a cutting edge 1002 comprising a first cutting edge portion 1004 and a second cutting edge portion 1006 consecutive so as to define a cutting edge vertex 1008. The first cutting edge portion 1004 and the second cutting edge portion 1006 further define an internal angle A1 comprised between 110 and 70 degrees, preferably of 90 degrees.

In particular, a bisector B1 of said internal angle A1 operatively defines an engagement angle A2 comprised between 3 and 20 degrees, preferably comprised between 5 and 15 degrees, with the second face 204 which is adjacent to the first face 202 which is at least partially joined to the inner surface 302 of said panel 301.

### Step e)

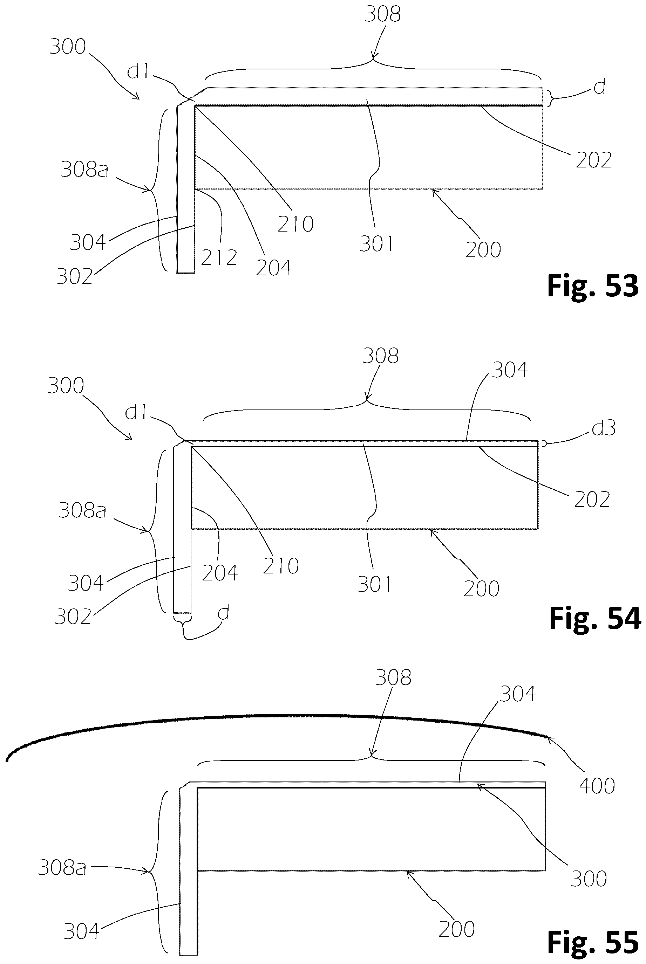

Subsequently, with reference to Fig. 53, the panel 301 is bent along the folding channel 306a so as to join the portion of the inner surface 302 of the second portion 308a to the second face 204 of the core 200.

In this state, the shell 300 which covers the core 200 of the composite element 100 is formed. Specifically, the shell 300 is made of a single piece starting from the panel 301, by folding, so as to form a shell having a substantially "L"-shaped cross-section in which the second portion 308a extends protruding from the second face 204 beyond the second edge 212.

### Step ee)

Subsequently, with reference to Fig. 54, material is removed from the outer surface 304 of the first portion 308 of the shell 300 so as to reduce the original thickness d thereof to a smaller thickness d3. Preferably, the material is removed by means of milling, however, the material removal technique is non-limiting and it may optionally be a cutting technique.

### Step f)

With reference to Fig. 55, after forming the shell 300 of the composite element 100, provided is the flexible covering film 400 which is dimensioned to cover at least a portion of the outer surface 304 of the first portion 308 and of the second portion 308a of the panel 301.

### Step g)

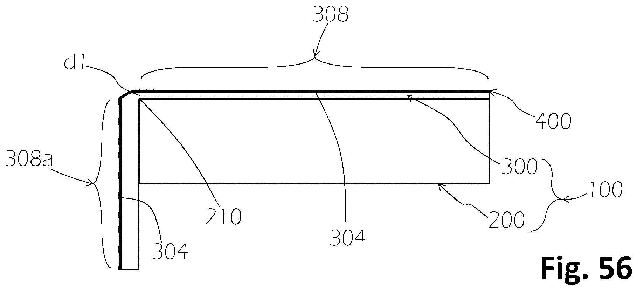

Subsequently, with reference to Fig. 56, the flexible covering film 400 is joined to the outer surface 304 of at least one from among the first portion 308 and the second portion 308a of the panel 301.

It is clear that the present invention can be obtained through other embodiments without departing from the scope claimed.

For example, it is possible to provide for a method for making a composite element 100 according to any of the previously described embodiments in which - after step e) and before step f) - the outer surface 304 of the shell 300, or of the bent panel 301, is chamfered at the folding channel/s 306a and/or 306b, thus making the corresponding edge of the shell 300 rounded. In this step, the reduced portion of the thickness d is maintained, or it is possibly reduced further. In this state, the flexible covering film 400 is joined to an outer surface 304 without edges which is particularly appreciated by an end user and/or which reduces the likelihood of breaking the flexible covering film 400 during the coupling thereof to the shell 300.

Furthermore, in the fourth embodiment the composite element 100 is formed starting from a single panel 301. However, it is possible to provide for an embodiment wherein the composite element 100 is formed starting from two separate panels 301 adapted to cover two different regions of the same core 200. Specifically, it is possible to form the shell 300 on the core 200 by means of a first step corresponding to the first embodiment for covering the second face 204, the tread 202b and the first edge 210, and a second step corresponding to the third embodiment for covering the fourth face 208, the curved portion 202a and the fourth edge 216.

Furthermore, in the previously described embodiments, the shell 300 fully covers the faces of the core 200; however, it is possible to provide for an embodiment wherein the shell 300 covers only a portion of the faces of the core 200.

Furthermore, in the fifth embodiment the shell 300 has a second portion 308a which extends protruding from the second face 204 beyond the second edge 212. However, it is possible to provide for an embodiment wherein the second portion 308a does not extend protruding from the second face 204 beyond the second edge 212. In this state, it is possible to provide for different thicknesses of the shell 300 at different faces of the core 200 in order to confer suitable aesthetic or structural characteristics to the composite element 100.

Furthermore, in the previous description there is provided for - in the fifth embodiment alone - a step ee) in which material is removed from the outer surface 304 of the first portion 308 of the shell 300 so as to reduce the original thickness d thereof to a smaller thickness d3. However, such step ee) can be provided for in any of the described embodiments so as to suitably reduce the original thickness of one or more portions of the panel 301 covering the faces of the core 200.

Furthermore, in the previously described embodiments, the flexible covering film 400 substantially fully covers the outer surface 304 of the shell 300. However, it is possible to provide for an embodiment in which one or more flexible covering film/s 400 fully or partially covers/cover the outer surface 304 of the shell 300.

Furthermore, in the previously described embodiments, the flexible covering film 400 preferably confers aesthetic characteristics; however, this choice is non-limiting and the flexible covering film 400 can confer other characteristics to the composite element 100, depending on the application, such as for example an improved scratch resistance, protection against substances or atmospheric agents, acting as a layer suitable to promote the adhesion of further films or paints, etc. Optionally, the flexible covering film 400 may consist of a paint.

Furthermore, in the previously described embodiments, the composite element 100, comprising the core 200 and the shell 300, can be associated with the flexible covering film 400; however, the composite element 100, comprising the core 200 and the shell 300, may not provide for the flexible covering film 400 on the surface thereof.

Furthermore, in the previous description the core 200 is made of natural wood, such as solid wood. However, this choice of material is non-limiting and the core 200 can be made of any suitable material, such as for example a metal or a polymeric resin forming a section having a suitable cross-section and to which the shell 300 is joined.

Furthermore, in the previous description the panel 301 with which the shell 300 is formed is made of artificial composite wood, such as MDF. However, this choice of material is non-limiting and the shell 300 may be made of any suitable artificial composite wood, such as for example low density fibreboard (LDF) or high-density fibreboard (HDF), and the like. Possibly, the panel 301 may be made of rigid plastic material which would tend to break when bent at the edges of the core 200. Thus, forming the folding channel/s allows to inhibit the likelihood of the panel, made of plastic material, breaking due to the rigidity thereof which is also as a function of the thickness d of the panel that is provided.

In the light of the above, it is clear that major results are achieved, overcoming the drawbacks of the prior art, thus allowing to define a method that can be used to form a composite element 100 comprising a core 200 and a shell 300 which at least partially covers two adjacent faces of the core 200. Specifically, the shell 300 is made of a single piece starting from a panel 301 which is without surface defects and on whose surface there can be associated a flexible covering film 400.

As a matter of fact, the shell 300 is obtained by folding the panel 301 substantially at the edge which connects the two adjacent faces of the core 200 to be covered to each other. Specifically, the thickness of the panel is reduced at the folding channel 301 so as to allow bending thereof without causing breakage. Advantageously, the depth of the folding channel, i.e. the extension of the reduced corresponding portion of thickness, can be adjusted according to the material that the panel is made of so as to allow its bending without causing it to break.

In this state, the core 200 can be advantageously covered with a panel 301 without changing the structural characteristics of the latter and increasing the aesthetic characteristics thereof. In the most preferred embodiment, the panel 301 has a relatively small thickness, preferably comprised between 0.5 and 1.5 mm. In other words, forming the panel 301 with a low-grade material, such as the artificial composite wood, and the core 200 with a high-grade material, such as natural wood, or solid wood, allows to guarantee adequate structural characteristics of the composite element 100, conferred by the core 200, and adequate surface characteristics suitable for the possible covering with the flexible covering film 400, conferred by the shell 300 or by the bent panel 301.

Furthermore, the shell 300 provides for a continuous surface even at the edges of the composite element 100, thus making adapted to be possibly covered by the flexible covering film 400.

Furthermore, the method described in the present document is an alternative to that described in document EP3725493 and, therefore, expands the range of production methods of composite elements comprising a core covered with a panel, making this structure particularly versatile, by choosing the most suitable method based, for example, on the shape of the composite element.

Furthermore, the method described in this document provides an increased precision in the forming phase of the composite element. In fact, by forming the folding channel on the inner surface 302 of the panel 301 using the tool 1000, it is possible to ensure with greater precision a correspondence between the edge of the core 200 and the position in which the folding channel is formed. In particular, the specific geometry of the tool 1000 and the engagement angle A2 with which it approaches the core 200 guarantee an effective phase of forming the folding channel and, at the same time, the absence of interference between the cutting tool 1000 with respect to the core 200 and the panel 300. In fact, using suitable sensors such as feeler-probes, it is possible to adjust in a simple way the position of the tool 1000 and its cutting edge 1002 based on the position of the core 200 and its faces in an automatic forming apparatus.

Further, as shown in Figs. 1 to 5, the method of the present invention is suitable for covering a core 200 having a differently shaped cross-section.

Furthermore, the method of the present invention is carried out starting from a single panel 301, possibly cut during the steps of covering the core 200 as shown in step e') of Fig. 43, and the number of steps provided for is minimal. For this reason, the present method can be easily integrated in automatic apparatus for making the composite elements 100.

Naturally, the materials and equipment used to implement the present invention, as well as the shape and dimensions of the individual components, may be the most suitable depending on the specific requirements.

## Claims

1. Method for making a composite element (100) comprising the steps of:
a) providing a core (200) comprising a plurality of faces (202, 204, 206, 208) adjacent to each other and connected to each other through edges (210, 212, 214, 216),
b) providing a panel (301) in one piece dimensioned to cover at least a surface region of said core (200) which comprises at least a portion of at least two faces (202, 204, 206, 208) adjacent and connected to each other through at least one of said edges (210, 212, 214, 216),
said panel (301) having a thickness (d), an inner surface (302) adapted to be operatively joined to said core (200) and an outer surface (304) opposite to said inner surface (302),
c) coupling said panel (301) to said core (200) so as one of said at least two faces (202, 204, 206, 208) joins at least partially to a portion of said inner surface (302) of said panel (301),
d) forming on said panel (301) at least a folding channel (306a, 306b) defining and connecting to each other at least two portions (308, 308a, 308b) adjacent of said panel (301) through a reduced portion (d1, d2) of said thickness (d),
said at least a folding channel (306a, 306b) being formed, moreover, operatively corresponding to said at least one of said edges (210, 212, 214, 216) of said core (200),
e) folding said panel (301) along said folding channel (306, 306a) so as to join the portion of inner surface (302) of each of said at least two portions (308, 308a, 308b) to the corresponding one of said at least two faces (202, 204, 206, 208) adjacent of said core (200),
**characterized in that**
in said step d) said at least a folding channel (306a, 306b) is formed on said inner surface (302) by means of a cutting tool (1000), wherein
said cutting tool (1000) is provided with a cutting edge (1002) comprising a first cutting edge portion (1004) and a second cutting edge portion (1006) consecutive each other so as to define a cutting edge vertex (1008), said first cutting edge portion (1004) and said second portion of cutting edge (1006) further defining an internal angle (A1) comprised between 110 and 70 degrees, and
a bisector (B1) of said internal angle (A1) operatively defining an engagement angle (A2) comprised between 3 and 20 degrees with the other of said at least two faces (202, 204, 206, 208) which is adjacent to that face (202, 204, 206, 208) at least partially joined to the inner surface (302) of said panel (301).

2. The method for making a composite element (100) according to claim 1, wherein after said step e) comprises the step of:
ee) removing material from said outer surface (304) of at least one of said at least two portions (308, 308a, 308b) so as to reduce its thickness to a reduced thickness (d3) which is lower than said thickness (d).

3. The method for making a composite element (100) according to claim 1 or 2, wherein after said step e) or said step ee) it comprises the steps of:
f) providing a flexible covering film (400) dimensioned to cover at least a portion of said outer surface (304) of at least one of said at least two portions (308, 308a, 308b),
g) joining the flexible covering film (400) to the outer surface (304) of at least one of said at least two portions (308, 308a, 308b).

4. The method for making a composite element (100) according to any of claims 1 to 3, wherein after said step e) or said step ee) it comprises a step of chamfering the outer surface (304) of said panel (301) at and/or near said at least a folding channel (306a, 306b).

5. The method for making a composite element (100) according to any of claims 1 to 4, wherein when in said step c) said face (202, 204, 206, 208) which joins at least partially to a portion of said inner surface (302) of said panel (301) it is, further, curved,
after said step c) and before said step d) said method comprises the step of:
c') bending said panel (301) so as to at least partially conform it to said face (202, 204, 206, 208) to which it is joined.

6. The method for making a composite element (100) according to any of claims 1 to 5, wherein when in said step c) said face (202, 204, 206, 208) which joins at least partially to a portion of said inner surface (302) of said panel (301) further comprises a step defined by a tread (202b) adjacent to one of said edges (210, 212, 214, 216), a riser (202c) and a corner (202d),
after said step c) and before said step d) said method comprises the step of:
c') bending said panel (301) so as to bring it closer to said edge (210, 212, 214, 216) which is adjacent to said tread (202b), and
after said step e) comprises the steps of:
e') cutting said panel (301) at said corner (202d) forming a suspended portion (308c) and an adherent portion (308d) of said panel (301), wherein said adherent portion (308d) is adherent to said core (200) and said suspended portion (308c) corresponds to said tread (202b) and is spaced from it,
e") folding said panel (301) along said folding channel (306a, 306b) which corresponds to the edge (210, 212, 214, 216) adjacent to said tread (202b) so as to join the portion of the inner surface (302) of said suspended portion (308c) to said tread (202b).

7. The method for making a composite element (100) according to any of claims 1 to 6, wherein said panel (301) is made of artificial wood.

8. The method for making a composite element (100) according to any of claims 1 to 7, wherein said panel (301) is made of MDF.

9. The method for making a composite element (100) according to any of claims 1 to 8, wherein said core (200) is made of natural wood.

10. Composite element (100) comprising:
a core (200) comprising a plurality of faces (202, 204, 206, 208) adjacent to each other and connected to each other through edges (210, 212, 214, 216),
a shell (300) arranged on said core (200) to cover at least a surface region thereof which comprises at least a portion of at least two faces (202, 204, 206, 208) adjacent and connected to each other through at least one of said edges (210, 212, 214, 216),
said shell (300) having an inner surface (302) adapted to be operatively joined to said core (200) and an outer surface (304) opposite to said inner surface (302), said inner surface (302) and said outer surface (304) being spaced from each other by a thickness (d),
said shell (300) being formed in one piece and comprising at least two portions (308, 308a, 308b) adjacent to each other and each adapted to cover a corresponding portion of said at least two faces (202, 204, 206, 208) adjacent,
said shell (300) comprising at least a folding channel (306a, 306b) defining and
connecting said at least two portions (308, 308a, 308b) through a reduced portion (d1, d2) of said thickness (d) which is adapted to act as hinge,
**characterized in that**
said at least a folding channel (306a, 306b) is formed on said inner surface (302) of said shell (300) in a position operatively corresponding to said at least one of said edges (210, 212, 214, 216) of said core (200), and
said folding channel (306a, 306b) being free of gluing substances.

## Patentansprüche

1. Verfahren zum Herstellen eines Verbundelementes (100), umfassend folgende Schritte:
a) Bereitstellen eines Kerns (200), der eine Vielzahl von aneinander grenzende und durch Ränder (210, 212, 214, 216) miteinander verbundene Flächen (202, 204, 206, 208) umfasst,
b) Bereitstellen einer einteiligen Platte (301), die so bemessen ist, dass sie mindestens einen Oberflächenbereich des Kerns (200) bedeckt, der mindestens einen Abschnitt von mindestens zwei Flächen (202, 204, 206, 208) umfasst, die aneinandergrenzen und durch mindestens eine der Kanten (210, 212, 214, 216) miteinander verbunden sind,
wobei die Platte (301) eine Dicke (d), eine Innenfläche (302), die mit dem Kern (200) funktionsfähig verbunden werden kann, und eine Außenfläche (304) gegenüber der Innenfläche (302) aufweist,
c) Verbinden der Platte (301) mit dem Kern (200), so dass eine der mindestens zwei Flächen (202, 204, 206, 208) mindestens teilweise an einen Abschnitt der Innenfläche (302) der Platte (301) anschließt,
d) Ausbilden mindestens eines Faltkanals (306a, 306b) auf der Platte (301), der mindestens zwei an die Platte (301) angrenzende Abschnitte (308, 308a, 308b) durch einen reduzierten Abschnitt (d1, d2) der Dicke (d) definiert und miteinander verbindet,
wobei der mindestens eine Faltkanal (306a, 306b) außerdem funktionell mit dem mindestens einen der Ränder (210, 212, 214, 216) des Kerns (200) korrespondierend ausgebildet ist, und
e) Falten der Platte (301) entlang des Faltkanals (306, 306a), um den Abschnitt der Innenfläche (302) jedes der mindestens zwei Abschnitte (308, 308a, 308b) mit der entsprechenden der mindestens zwei Flächen (202, 204, 206, 208) neben dem Kern (200) zu verbinden,
**dadurch gekennzeichnet, dass**
in Schritt d) der mindestens eine Faltkanal (306a, 306b) auf der Innenfläche (302) mit Hilfe eines Schneidwerkzeugs (1000) ausgebildet wird, wobei
das Schneidwerkzeug (1000) mit einer Schneidkante (1002) versehen ist, die einen ersten Schneidkantenabschnitt (1004) und einen zweiten Schneidkantenabschnitt (1006) umfasst, die so aufeinander folgen, dass sie einen Schneidkantenscheitel (1008) definieren, wobei der erste Schneidkantenabschnitt (1004) und der zweite Schneidkantenabschnitt (1006) ferner einen Innenwinkel (A1) zwischen 110 und 70 Grad definieren, und
eine Winkelhalbierende (B1) des Innenwinkels (A1) operativ einen Eingriffswinkel (A2) zwischen 3 und 20 Grad mit der anderen der mindestens zwei Flächen (202, 204, 206, 208) definiert, die an die Fläche (202, 204, 206, 208) angrenzt, die mindestens teilweise mit der Innenfläche (302) der Platte (301) verbunden ist.

2. Verfahren zum Herstellen eines Verbundelementes (100) nach Anspruch 1, bei dem nach dem Schritt e) folgender Schritt erfolgt:
ee) Entfernen von Material von der Außenfläche (304) von mindestens einem der mindestens zwei Abschnitte (308, 308a, 308b), um dessen Dicke auf eine reduzierte Dicke (d3) zu verringern, die geringer ist als die Dicke (d).

3. Verfahren zum Herstellen eines Verbundelementes (100) nach Anspruch 1 oder 2, wobei es nach dem Schritt e) oder dem Schritt ee) die folgenden Schritte umfasst:
f) Bereitstellen einer flexiblen Abdeckfolie (400), die so bemessen ist, dass sie mindestens einen Abschnitt der Außenfläche (304) von mindestens einem der mindestens zwei Abschnitte (308, 308a, 308b) bedeckt, und
g) Verbinden der flexiblen Abdeckfolie (400) mit der Außenfläche (304) von mindestens einem der mindestens zwei Abschnitte (308, 308a, 308b).

4. Verfahren zum Herstellen eines Verbundelementes (100) nach einem der Ansprüche 1 bis 3, wobei es nach dem Schritt e) oder dem Schritt ee) einen Schritt des Abschrägens der Au ßenfläche (304) der Platte (301) an und/oder in der Nähe des mindestens einen Faltkanals (306a, 306b) umfasst.

5. Verfahren zum Herstellen eines Verbundelementes (100) nach einem der Ansprüche 1 bis 4, wobei in Schritt c) die Fläche (202, 204, 206, 208), die zumindest teilweise an einen Abschnitt der Innenfläche (302) der Platte (301) anschließt, außerdem gekrümmt ist, und
nach dem Schritt c) und vor dem Schritt d) das Verfahren folgenden Schritt umfasst:
c') Biegen der Platte (301), um sie zumindest teilweise an die Fläche (202, 204, 206, 208) anzupassen, mit der sie verbunden ist.

6. Verfahren zum Herstellen eines Verbundelementes (100) nach einem der Ansprüche 1 bis 5, bei dem in Schritt c) die Fläche (202, 204, 206, 208), die sich zumindest teilweise an einen Abschnitt der Innenfläche (302) der Platte (301) anschließt, ferner eine Stufe umfasst, die durch eine an eine der Ränder (210, 212, 214, 216) angrenzende Trittfläche (202b), eine Steigung (202c) und eine Ecke (202d) definiert ist,
nach dem Schritt c) und vor dem Schritt d) das Verfahren folgenden Schritt umfasst:
c') Biegen der Platte (301), um sie näher an den Rand (210, 212, 214, 216) zu bringen, der an die Trittfläche (202b) angrenzt, und
nach dem genannten Schritt e) folgende Schritte umfasst:
e') Schneiden der Platte (301) an der Ecke (202d), wodurch ein aufgehängter Abschnitt (308c) und ein anhaftender Abschnitt (308d) der Platte (301) ausgebildet werden, wobei der anhaftende Abschnitt (308d) an dem Kern (200) anhaftet und der aufgehängte Abschnitt (308c) der Lauffläche (202b) entspricht und von ihr beabstandet ist, und
e") Falten der Platte (301) entlang des Faltkanals (306a, 306b), der dem Rand (210, 212, 214, 216) neben der Lauffläche (202b) entspricht, um den Teil der Innenfläche (302) des aufgehängten Teils (308c) mit der Lauffläche (202b) zu verbinden.

7. Verfahren zum Herstellen eines Verbundelementes (100) nach einem der Ansprüche 1 bis 6, bei dem die Platte (301) aus künstlichem Holz hergestellt ist.

8. Verfahren zum Herstellen eines Verbundelementes (100) nach einem der Ansprüche 1 bis 7, bei dem die Platte (301) aus MDF hergestellt ist.

9. Verfahren zum Herstellen eines Verbundelementes (100) nach einem der Ansprüche 1 bis 8, bei dem der Kern (200) aus natürlichem Holz hergestellt ist.

10. Verbundelement (100), umfassend:
einen Kern (200), der eine Vielzahl von Flächen (202, 204, 206, 208) umfasst, die aneinander angrenzen und durch Kanten (210, 212, 214, 216) miteinander verbunden sind,
eine Bekleidung (300), die auf dem Kern (200) angeordnet ist, um mindestens einen Oberflächenbereich desselben zu bedecken, der mindestens einen Abschnitt von mindestens zwei Flächen (202, 204, 206, 208) umfasst, die aneinandergrenzen und durch mindestens einen der Ränder (210, 212, 214, 216) miteinander verbunden sind,
wobei die Bekleidung (300) eine Innenfläche (302), die geeignet ist, mit dem Kern (200) funktionell verbunden zu werden, und eine der Innenfläche (302) gegenüberliegende Außenfläche (304) aufweist, wobei die Innenfläche (302) und die Außenfläche (304) durch eine Dicke (d) voneinander beabstandet sind, und
die Bekleidung (300) in einem Stück geformt ist und mindestens zwei aneinander angrenzende Abschnitte (308, 308a, 308b) aufweist, die jeweils einen entsprechenden Abschnitt der mindestens zwei angrenzenden Flächen (202, 204, 206, 208) abdecken können,
die Bekleidung (300) mindestens einen Faltkanal (306a, 306b) aufweist, der die mindestens zwei Abschnitte (308, 308a, 308b) durch einen reduzierten Abschnitt (d1, d2) der Dicke (d), der als Scharnier wirken kann, definiert und verbindet,
**dadurch gekennzeichnet, dass**
der mindestens eine Faltkanal (306a, 306b) auf der Innenfläche (302) der Bekleidung (300) in einer Position ausgebildet ist, die funktionell dem mindestens einen der Ränder (210, 212, 214, 216) des Kerns (200) entspricht, und
der Faltkanal (306a, 306b) frei von klebenden Substanzen ist.

## Revendications

1. - Procédé de fabrication d'un élément composite (100) comprenant les étapes :
a) disposer une âme (200) comprenant une pluralité de faces (202, 204, 206, 208) adjacentes les unes aux autres et reliées entre elles par des arêtes (210, 212, 214, 216),
b) disposer un panneau (301) d'une seule pièce dimensionné pour couvrir au moins une région de surface de ladite âme (200) qui comprend au moins une partie d'au moins deux faces (202, 204, 206, 208) adjacentes et reliées l'une à l'autre par au moins une desdites arêtes (210, 212, 214, 216),
ledit panneau (301) ayant une épaisseur (d), une surface intérieure (302) apte à être jointe de manière fonctionnelle à ladite âme (200), et une surface extérieure (304) opposée à ladite surface intérieure (302),
c) accoupler ledit panneau (301) à ladite âme (200) de telle sorte que l'une desdites au moins deux faces (202, 204, 206, 208) est au moins partiellement jointe à une partie de ladite surface intérieure (302) dudit panneau (301),
d) former, sur ledit panneau (301), au moins un canal de pliage (306a, 306b) définissant et reliant l'une à l'autre au moins deux parties (308, 308a, 308b) adjacentes dudit panneau (301) par une partie réduite (d1, d2) de ladite épaisseur (d),
ledit au moins un canal de pliage (306a, 306b) étant formé, en outre, en correspondance fonctionnelle avec ladite au moins une desdites arêtes (210, 212, 214, 216) de ladite âme (200),
e) plier ledit panneau (301) le long dudit canal de pliage (306, 306a) de façon à joindre la partie de la surface intérieure (302) de chacune desdites au moins deux parties (308, 308a, 308b) à celle correspondante desdites au moins deux faces (202, 204, 206, 208) adjacentes à ladite âme (200),
**caractérisé par le fait que**
dans ladite étape d), ledit au moins un canal de pliage (306a, 306b) est formé sur ladite surface intérieure (302) au moyen d'un outil de coupe (1000),
ledit outil de coupe (1000) comportant une arête de coupe (1002) comprenant une première partie d'arête de coupe (1004) et une seconde partie d'arête de coupe (1006) consécutives l'une à l'autre de façon à définir un sommet d'arête de coupe (1008), ladite première partie d'arête de coupe (1004) et ladite seconde partie d'arête de coupe (1006) définissant en outre un angle interne (A1) compris entre 110 et 70 degrés, et
une bissectrice (B1) dudit angle interne (A1) définissant de manière fonctionnelle un angle d'engagement (A2) compris entre 3 et 20 degrés avec l'autre desdites au moins deux faces (202, 204, 206, 208) qui est adjacente à cette face (202, 204, 206, 208) au moins partiellement jointe à la surface intérieure (302) dudit panneau (301).

2. - Procédé de fabrication d'un élément composite (100) selon la revendication 1, après ladite étape e), comprenant l'étape :
ee) enlever du matériau de ladite surface extérieure (304) d'au moins une desdites au moins deux parties (308, 308a, 308b) de façon à réduire son épaisseur à une épaisseur réduite (d3) qui est inférieure à ladite épaisseur (d).

3. - Procédé de fabrication d'un élément composite (100) selon la revendication 1 ou 2, après ladite étape e) ou ladite étape ee), comprenant les étapes :
f) disposer un film de recouvrement souple (400) dimensionné pour couvrir au moins une partie de ladite surface extérieure (304) d'au moins une desdites au moins deux parties (308, 308a, 308b),
g) joindre le film de recouvrement souple (400) à la surface extérieure (304) d'au moins une desdites au moins deux parties (308, 308a, 308b).

4. - Procédé de fabrication d'un élément composite (100) selon l'une quelconque des revendications 1 à 3, après ladite étape e) ou ladite étape ee), comprenant une étape de chanfreinage de la surface extérieure (304) dudit panneau (301) à et/ou près dudit au moins un canal de pliage (306a, 306b).

5. - Procédé de fabrication d'un élément composite (100) selon l'une quelconque des revendications 1 à 4, dans lequel, lors de ladite étape c), ladite face (202, 204, 206, 208) qui est au moins partiellement jointe à une partie de ladite surface intérieure (302) dudit panneau (301) est en outre courbée,
après ladite étape c) et avant ladite étape d), ledit procédé comprend l'étape :
c') plier ledit panneau (301) de façon à le conformer au moins partiellement à ladite face (202, 204, 206, 208) à laquelle il est joint.

6. - Procédé de fabrication d'un élément composite (100) selon l'une quelconque des revendications 1 à 5, dans lequel, lors de ladite étape c), ladite face (202, 204, 206, 208) qui est au moins partiellement jointe à une partie de ladite surface intérieure (302) dudit panneau (301) comprend en outre une marche définie par un pas (202b) adjacent à une desdites arêtes (210, 212, 214, 216), une contremarche (202c) et un coin (202d),
après ladite étape c) et avant ladite étape d), ledit procédé comprend l'étape :
c') plier ledit panneau (301) de façon à le rapprocher de ladite arête (210, 212, 214, 216) qui est adjacente audit pas (202b), et
après ladite étape e) comprend les étapes :
e') couper ledit panneau (301) audit coin (202d), formant une partie suspendue (308c) et une partie adhérente (308d) dudit panneau (301), ladite partie adhérente (308d) adhérant à ladite âme (200) et ladite partie suspendue (308c) correspondant audit pas (202b) et étant espacé de celle-ci,
e") plier ledit panneau (301) le long dudit canal de pliage (306a, 306b) qui correspond à l'arête (210, 212, 214, 216) adjacente audit pas (202b) de façon à joindre la partie de la surface intérieure (302) de ladite partie suspendue (308c) audit pas (202b).

7. - Procédé de fabrication d'un élément composite (100) selon l'une quelconque des revendications 1 à 6, dans lequel ledit panneau (301) est fait de bois artificiel.

8. - Procédé de fabrication d'un élément composite (100) selon l'une quelconque des revendications 1 à 7, dans lequel ledit panneau (301) est fait de fibre à densité moyenne.

9. - Procédé de fabrication d'un élément composite (100) selon l'une quelconque des revendications 1 à 8, dans lequel ladite âme (200) est faite de bois naturel.

10. - Élément composite (100) comprenant :
une âme (200) comprenant une pluralité de faces (202, 204, 206, 208) adjacentes et reliées entre elles par des arêtes (210, 212, 214, 216),
une coque (300) disposée sur ladite âme (200) pour couvrir au moins une région de surface de celle-ci qui comprend au moins une partie d'au moins deux faces (202, 204, 206, 208) adjacentes et reliées l'une à l'autre par au moins une desdites arêtes (210, 212, 214, 216),
ladite coque (300) ayant une surface intérieure (302) apte à être jointe de manière fonctionnelle à ladite âme (200) et une surface extérieure (304) opposée à ladite surface intérieure (302), ladite surface intérieure (302) et ladite surface extérieure (304) étant espacées l'une de l'autre d'une épaisseur (d),
ladite coque (300) étant formée d'une seule pièce et comprenant au moins deux parties (308, 308a, 308b) adjacentes l'une à l'autre et aptes chacune à couvrir une partie correspondante desdites au moins deux faces (202, 204, 206, 208) adjacentes,
ladite coque (300) comprend au moins un canal de pliage (306a, 306b) définissant et reliant lesdites au moins deux parties (308, 308a, 308b) par une partie réduite (d1, d2) de ladite épaisseur (d) qui est apte à servir de charnière,
**caractérisé par le fait que**
ledit au moins un canal de pliage (306a, 306b) est formé sur ladite surface intérieure (302) de ladite coque (300) dans une position correspondant de manière fonctionnelle à ladite au moins une desdites arêtes (210, 212, 214, 216) de ladite âme (200), et
ledit canal de pliage (306a, 306b) est exempt de substances collantes.
